# EUROPÄISCHE PATENTANMELDUNG

(11) **EP 0 890 463 A2**
(43) Veröffentlichungstag der Anmeldung: **13.01.1999**
(21) Anmeldenummer: 98108149.0
(22) Anmeldetag: 05.05.1998
(51) Int. Cl.: B60G 17/052

(54) **Verfahren zum Ändern der Höhenlage wenigstens eines Bereiches eines Fahrzeugaufbaues**

(30) Priorität: 09.07.1997 DE 19729274
(71) Anmelder: WABCO GmbH, 30453 Hannover (DE)
(72) Erfinder: Lucas, Johann, 31319 Hannover (DE); Zimpel, Dieter, 31535 Neustadt (DE)
(74) Vertreter: Schrödter, Manfred

(57) **Zusammenfassung**

Bei einem Fahrzeug, welches zwischen dem Fahrzeugaufbau (3) und den Achsen (4,38) angeordnete Luftfederbälge (1,14,23,27) besitzt, über welche der Fahrzeugaufbau an den Achsen abgestützt ist, kann auf Anforderung die Höhenlage des Fahrzeugaufbaues durch Ablassen von Druckluft aus den Luftfederbälgen und durch Einsteuern von Druckluft in die Luftfederbälge verändert werden.

Um zu verhindern, daß beim Ändern der Höhenlage, insbesondere beim einseitigen Absenken des Fahrzeugaufbaues, der Fahrzeugaufbau hart auf ein Hindernis aufsetzt, wird beim Erkennen eines Hindernisses das Ändern der Höhenlage des Fahrzeugaufbaues selbsttätig beendet.

Vorteilhafterweise schließt an das selbsttätige vorzeitige Beenden des Änderns der Höhenlage des Fahrzeugaufbaues in der einen Richtung ein selbsttätiges Ändern der Höhenlage des Fahrzeugaufbaues in der anderen Änderungsrichtung an, welches dann beendet wird, wenn das Hindernis nicht mehr erkannt wird.

## Beschreibung

Die Erfindung betrifft ein Verfahren zum Ändern der Höhenlage wenigstens eines Bereiches eines Fahrzeugaufbaues gemäß dem Oberbegriff des Patentanspruchs 1.

Ein derartiges Verfahren ist aus der DE 38 43 378 A1 bekannt.

Gemäß dem bekannten Verfahren wird bei einem Fahrzeug, welches zwischen Achsen und Fahrzeugaufbau angeordnete, zur Federung dienende Luftfederbälge besitzt, der Fahrzeugaufbau auf Anforderung gegenüber einer Achse wahlweise abgesenkt oder angehoben. Das Absenken des Fahrzeugaufbaues erfolgt in der Weise, daß Luft aus den Luftfederbälgen, welche auf dieser Achse sitzen, abgelassen wird. Soll der Fahrzeugaufbau wieder angehoben werden, wird in die beiden aktuellen Luftfederbälge Luft aus einem Druckluft-Vorratsbehälter nachgefüllt.

Ein solches Verfahren und auch eine entsprechende Einrichtung zum Durchführen des Verfahrens finden insbesondere bei im Linienverkehr eingesetzten Bussen Verwendung, um den Fahrgästen das Einsteigen und Aussteigen zu erleichtern.

Besonders im Innenstadtbereich kommt es häufig vor, daß Bushaltestellen keine Haltebucht mit abgesenkten Bordsteinen besitzen, sondern daß die Bushaltestellen sich in Bereichen befinden, in welchen die Fahrbahn von Bordsteinen begrenzt wird, die gegenuber der Fahrbahn ein erheblich höheres Niveau aufweisen.

Wird die den Bordsteinen zugewandte Seite des Fahrzeugaufbaues abgesenkt, ist es nicht auszuschließen, daß der Fahrzeugaufbau mit dieser Seite auf den Bordsteinen aufsetzt. Da ein solches Aufsetzen mehr oder weniger abrupt erfolgt, besteht die Gefahr, daß Fahrgäste zu Fall kommen. Ebenso sind durch dieses abrupte Aufsetzen Beschädigungen am Fahrzeugaufbau nicht auszuschließen.

Der Erfindung liegt deshalb die Aufgabe zugrunde, ein Verfahren der eingangs erwähnten Art so zu verbessern, daß bei einer Änderung der Höhenlage wenigstens eines Bereiches eines Fahrzeugaufbaues eine harte Kontaktnahme des Fahrzeugaufbaues mit einem Hindernis vermieden wird.

Diese Aufgabe wird mit dem im Patentanspruch 1 angegebenen Verfahren gelöst. Vorteilhafte Weiterbildungen des Verfahrens sind in den Patentansprüchen 2 bis 6 angegeben. Im Patentanspruch 7 ist eine Einrichtung zum Durchführen des Verfahrens nach Patentanspruch 1 angegeben. Weiterbildungen und vorteilhafte Ausgestaltungen der Einrichtung gemäß dem Patentanspruch 7 werden in den Unteransprüchen 8 bis 12 aufgezeigt.

Die Erfindung bietet insbesondere den Vorteil, daß bei einer Änderung der Höhenlage wenigstens eines Bereiches des Fahrzeugaufbaues, unabhängig von der Änderungsrichtung - Fahrzeugaufbau absenken oder Fahrzeugaufbau anheben - , ein Hindernis erkannt und das Ändern der Höhenlage dieses Bereiches des Fahrzeugaufbaues selbsttätig beendet wird, wenn dieser Bereich des Fahrzeugaufbaues das Hindernis erreicht bzw. bevor dieser Bereich des Fahrzeugaufbaues das Hindernis erreicht.

Gemäß den in den Patentansprüchen 4, 5 und 6 angegebenen Weiterbildungen der Erfindung schließt an das vorzeitige selbsttätige Beenden des Änderns der Höhenlage des Fahrzeugaufbaues in der einen Änderungsrichtung ein selbsttätiges Ändern der Höhenlage des Fahrzeugaufbaues in der anderen Änderungsrichtung an, wobei dieser Vorgang beendet wird, wenn das diesen Vorgang bewirkende Signal abfällt oder wenn ein Abschaltsignal auftritt bzw. sobald die Einrichtung zum Erkennen eines Hindernisses das Hindernis nicht mehr erkennt.

Da nach dem Abbrechen des Vorgangs des Änderns der Höhenlage in Richtung Fahrzeugaufbau absenken der Fahrzeugaufbau nicht auf das Normalniveau gebracht wird, sondern nur die Druckmittelmenge in die Druckmittelkammern der Tragelemente eingesteuert wird, die erforderlich ist, um einen vorbestimmten Sicherheitsabstand zwischen Hindernis und Fahrzeugaufbau herzustellen, wird Druckmittel gespart. Es wird somit auch weniger Druckmittel dem Druckmittel-Vorratsbehälter entnommen und deshalb ein zusätzliches Tätigwerden des das Druckmittel erzeugenden Gerätes, wie z. B. Kompressor oder Hydraulikpumpe, vermieden.

Vorteilhafterweise ist auch an der den Tragelementen für den Fahrzeugaufbau abgewandten Seite des Fahrzeugaufbaues eine Einrichtung zum Erkennen eines Hindernisses angeordnet.

Durch eine solche Maßnahme wird verhindert, daß der Fahrzeugaufbau unbeabsichtigten Kontakt, z B. mit der Decke einer Werkstatt, bekommt, wenn der Fahrzeugaufbau zu Wartungszwecken angehoben wird.

Die Einrichtung zum Erkennen eines Hindernisses ist in vorteilhafter Weise als einfacher elektro-mechanischer Fühler ausgebildet, der am Fahrzeugaufbau um eine Drehachse verschwenkbar angeordnet ist und bei Kontaktnahme mit einem Hindernis zwei Kontaktelemente miteinander in Kontakt bringt, über welche dann ein Stromkreis geschlossen wird.

Vorteilhafterweise kann die Einrichtung zum Erkennen eines Hindernisses auch als opto-elektronischer Fühler oder auch als einfache Lichtschranke ausgebildet sein, der bzw. die praktisch verschleißfrei arbeitet.

Anhand der Zeichnung wird nachfolgend ein Ausführungsbeispiel der Erfindung näher erläutert.

Es zeigen:
- Fig. 1: schematisch die Luftfederanlage eines Fahrzeugs mit einer Einrichtung zum wahlweisen Absenken oder Anheben des Fahrzeugaufbaues und einer Einrichtung zum Erkennen eines Hindernisses bei einem Absenkvorgang oder einem Anhebevorgang und
- Fig. 2: ein Fahrzeug, welches die Luftfederanlage gemäß Fig. 1 enthält.

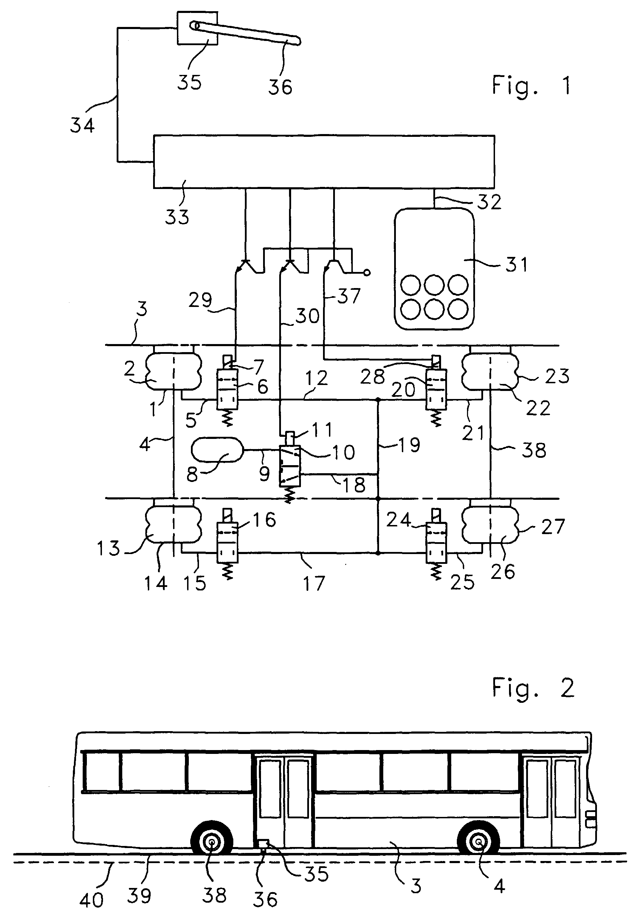

Die in Fig. 1 gezeigte Luftfederanlage ist für ein zweiachsiges Fahrzeug, wie z. B. einen Omnibus, vorgesehen. Zwischen einer ersten Fahrzeugachse (4), z. B. der Vorderachse, und einem Fahrzeugaufbau (3) bzw. einer Fahrzeugzelle, sind eine erste Luftfeder (1, 2) und eine zweite Luftfeder (14, 13) angeordnet, wobei jede dieser Luftfedern (1, 2 bzw. 14, 13) aus einem Luftfederbalg (1 bzw. 14) besteht, der eine Druckmittelkammer (2 bzw. 13) aufweist. Ebenso sind zwischen einer zweiten Fahrzeugachse (38), z. B. der Hinterachse, und dem Fahrzeugaufbau (3) bzw. der Fahrzeugzelle eine dritte Luftfeder (22, 23) und eine vierte Luftfeder (26, 27) angeordnet, wobei jede dieser Luftfedern (22, 23 bzw. 26, 27) aus einem Luftfederbalg (23 bzw. 27) besteht, der eine Druckmittelkammer (22 bzw. 26) aufweist. Die Luftfedern (1, 2, 14, 13, 22, 23, 26, 27) dienen als Tragelemente, über welche der Fahrzeugaufbau (3) bzw. die Fahrzeugzelle gegenüber den Fahrzeugachsen (4 und 38) federnd abgestützt ist.

Der ersten Luftfeder (1, 2) ist ein als 2/2-Wegeventil (6, 7) ausgebildetes erstes Ventil zugeordnet, dessen Druckmittelausgang über eine Druckmittelleitung (5) mit der Druckmittelkammer (2) der ersten Luftfeder (1, 2) verbunden ist. Der Druckmittelausgang eines als 2/2-Wegeventil (16) ausgebildeten zweiten Ventils ist über eine Druckmittelleitung (15) mit der Druckmittelkammer (13) der zweiten Luftfeder (14, 13) verbunden. Der Druckmittelausgang eines als 2/2-Wegeventil (20, 28) ausgebildeten dritten Ventils steht über eine Druckmittelleitung (21) mit der Druckmittelkammer (22) der dritten Luftfeder (22, 23) in Verbindung und der Druckmittelausgang eines als 2/2-Wegeventil (24) ausgebildeten vierten Ventils ist über eine Druckmittelleitung (25) mit der Druckmittelkammer (26) der vierten Luftfeder (26, 27) verbunden. Diese vier Ventile (6, 7, 16, 20, 28 und 24) sind als elektromagnetisch betätigbare Ventile ausgebildet.

Die Eingänge dieser vier Ventile (6, 7, 16, 20, 28 und 24) stehen über Druckmittelleitungen (12, 17, 19, 18) mit dem Ausgang eines als elektromagnetisch betätigbares 3/2-Wegeventil (10, 11) ausgebildeten fünften Ventils in Verbindung. Der Eingang des 3/2-Wegeventils (10, 11) ist über eine Druckmittelleitung (9) mit einer von einem Druckluft-Vorratsbehälter (8) gebildeten Druckmittelquelle verbunden.

Die fünf Ventile (6, 7, 16, 20, 28, 24 und 10, 11) besitzen Elektromagneten (7, 28, 11), die zu ihrer Betätigung dienen. Die Elektromagneten (7, 28, 11) der Ventile (6, 7, 16, 20, 28, 24, 10, 11) sind über elektrische Leitungen (29, 37, 30) mit den Endstufen einer elektrischen Auswerte- und Steuereinrichtung (33) verbunden. Der besseren Übersicht halber sind in diesem Ausführungsbeispiel lediglich die elektrischen Verbindungen zwischen der Auswerte- und Steuereinrichtung (33) und dem der ersten Luftfeder (1, 2) zugeordneten ersten 2/2-Wegeventil (6, 7) und dem der dritten Luftfeder (22, 23) zugeordneten dritten 2/2-Wegeventil (20, 28) sowie die elektrische Verbindung zwischen der Auswerte- und Steuereinrichtung (33) und dem an den Druckluft-Vorratsbehälter (8) angeschlossenen 3/2-Wegeventil (10, 11) dargestellt.

Eine als Eingabeeinheit (31) ausgebildete Schalteinrichtung zur freien Wahl der Vorgänge "Fahrzeugaufbau (3) absenken" und "Fahrzeugaufbau (3) anheben" steht über eine elektrische Leitung (32) mit einem Eingang der elektrischen Auswerte- und Steuereinrichtung (33) in Verbindung. Ein weiterer Eingang der elektrischen Auswerte- und Steuereinrichtung (33) ist über eine elektrische Leitung (34) mit einer Einrichtung zum Erkennen eines Hindernisses (35, 36) verbunden.

Die Einrichtung zum Erkennen eines Hindernisses (35, 36) besteht aus einem zwei Kontakte aufweisenden Schalter (35) und einem als Fühler (36) dienenden Hebel. Der Fühler (36) ist mit seinem einen Ende an einer im Gehäuse des Schalters (35) um ihre Längsachse drehbar angeordneten Welle befestigt. Die Welle trägt ein Kontaktelement, welches bei einer durch eine Verschwenkbewegung des Fühlers (36) um die Drehachse der Welle verursachten Drehbewegung der Welle mit einem Gegenkontaktelement in Kontakt kommt, wodurch ein elektrisches Signal in Form einer elektrischen Spannung freigegeben wird. Das elektrische Signal gelangt über die elektrische Leitung (34) zur Auswerte- und Steuereinrichtung (33). Der Schalter (35) ist am unteren Rand des Fahrzeugaufbaues auf der rechten Seite des Fahrzeugs angeordnet, und zwar so, daß der Fühler (36) mit seinem freien Endbereich mit dem Rand abschließt oder nur geringfügig über den Rand hinausragt.

Die elektrische Auswerte- und Steuereinrichtung (33) ist so ausgebildet, daß sie bei Vorhandensein eines Signals der Eingabeeinheit (31) eine Spannung auf den Magneten wenigstens eines der Ventile gibt, wodurch das Ventil in der Weise angesteuert wird, daß durch Reduzieren der Druckmittelmenge in der Druckmittelkammer wenigstens einer Luftfeder oder durch Einsteuern von Druckmittel in die Druckmittelkammer wenigstens einer Luftfeder wenigstens ein Bereich des Fahrzeugaufbaues abgesenkt oder angehoben wird. Unter einem Bereich des Fahrzeugaufbaues ist zu verstehen: die rechte Seite, die linke Seite, die Heckseite, die Frontseite oder der mittlere Teil z. B. eines Gelenkfahrzeugs.

Wird während des Änderns der Höhenlage des Fahrzeugaufbaues von der Einrichtung zum Erkennen eines Hindernisses ein auf ein Hindernis hinweisendes Signal auf die Auswerte- und Steuereinrichtung gegeben, fällt die Spannung an dem Magneten des Ventils ab und das Ventil gelangt in seine Ausgangsstellung zurück. Der Absenk- oder Anhebevorgang wird abgebrochen.

Ist die Auswerte- und Steuereinrichtung so ausgebildet, daß an das Ändern der Höhenlage des Fahrzeugaufbaues in der einen Richtung , nach dem Erkennen eines Hindernisses und dem vorzeitigen Beenden dieses Vorgangs , eine Änderung der Höhenlage des Fahrzeugaufbaues in der entgegengesetzten anderen Richtung anschließt, dann endet diese , wenn das Signal der Einrichtung zum Erkennen eines Hindernisses abfällt oder durch ein anderes Signal ersetzt wird.

Fig. 2 zeigt ein Fahrzeug, welches mit einer Luftfederanlage gemäß Fig. 1 ausgerüstet ist. Der besseren Übersicht halber sind den in Fig. 1 gezeigten Bauteilen gleiche Bauteile mit gleichen Bezugsziffern versehen.

Das Fahrzeug ist in einer Position dargestellt, in welcher es mit seiner rechten Seite an einem Bordstein (39), welcher eine Fahrbahn (40) begrenzt, geparkt ist. An der dem Bordstein (39) zugewandten Seite des Fahrzeugs ist am Boden des Fahrzeugaufbaues (3) die Einrichtung zum Erkennen eines Hindernisses (35, 36) so angeordnet, daß der Fühler (36) der Einrichtung (35, 36) mit seinem freien Ende mit der unteren Außenkante des Fahrzeugaufbaues (3) bzw. der Fahrzeugzelle abschließt oder in Richtung auf den Bordstein (39) zu nur unwesentlich über diese hinausragt.

Das erfindungsgemäße Verfahren und seine Anwendung in der vorstehend beschriebenen Luftfederanlage eines Fahrzeugs wird nachfolgend näher erläutert.

Es wird angenommen, daß das Fahrzeug Normal-Niveau hat, d. h., Fahrzeugachsen (4, 38) und Fahrzeugaufbau (3) haben einen mittleren Abstand zueinander bzw. der Fahrzeugaufbau hat einen mittleren Abstand zur Fahrbahn. Das 3/2-Wegeventil (10, 11) befindet sich in seiner Ausgangsstellung, in welcher es die Eingänge der den Luftfedern (1, 2, 14, 13, 22, 23, 26, 27) zugeordneten 2/2-Wegeventile (6, 7, 16, 20, 28, 24) gegen den Druckluft Vorratsbehälter (8) absperrt und mit der Atmosphäre verbindet. Die 2/2-Wegeventile (6, 7, 16, 20, 28, 24) befinden sich ebenfalls in ihrer Ausgangsstellung, in welcher sie die Druckmittelkammern (2, 13, 22, 26) der Luftfedern (1, 2, 14, 13, 22, 23, 26, 27) gegen das 3/2-Wegeventil (10, 11) absperren.

Hält der Fahrer des Fahrzeugs das Fahrzeug an einer Haltestelle an, die einen die Fahrbahn (40) begrenzenden Bordstein (39) aufweist, und will er die dem Bordstein (39) zugewandte Seite des Fahrzeugs absenken, um den Passagieren das Einsteigen in das Fahrzeug zu erleichtern, betätigt er eine entsprechende Taste der Eingabeeinheit (31). Von der Auswerte- und Steuereinrichtung (33) wird eine Spannung auf den Elektromagneten (7) des der rechten vorderen Luftfeder (1, 2) zugeordneten 2/2-Wegeventils (6, 7) und den Elektromagneten (28) des der rechten hinteren Luftfeder (22, 23) zugeordneten 2/2-Wegeventils (20, 28) gegeben. Die beiden 2/2-Wegeventile (6, 7 und 20, 28) schalten in der Weise um, daß die Druckmittelkammern (2 und 22) der Luftfedern (1, 2 und 22, 23) über die Druckmittelleitungen (12, 19 und 18) sowie das 3/2-Wegeventil (10, 11) mit der Atmosphäre verbunden werden. Die Druckmittelmenge in den Druckmittelkammern (2 und 23) der Luftfedern (1, 2 und 22, 23) wird dadurch verringert und die dem Bordstein (39) zugewandte Seite des Fahrzeugaufbaues (3) wird dabei durch Verringern des Abstandes zwischen diesem Bereich des Fahrzeugaufbaues (3) und den Fahrzeugachsen (4, 38) in Richtung auf die Fahrbahn (40) zu abgesenkt, bis das gewünschte Niveau dieser Seite des Fahrzeugaufbaues (3) erreicht ist. Die Spannung an den Elektromagneten (7 und 28) der 2/2-Wegeventile (6, 7 und 20, 28) fällt dann ab. Die 2/2-Wegeventile (6, 7 und 20, 28) gelangen in ihre Schließstellung, so daß die Druckmittelkammern (2 und 23) der Luftfedern (1, 2 und 22, 23) dann wieder gegen die Atmosphäre abgesperrt sind.

Soll die rechte Seite des Fahrzeugaufbaues (3) wieder auf "Normal-Niveau" gebracht werden, betätigt der Fahrer des Fahrzeugs eine entsprechende andere Taste der Eingabeeinheit (31). Von der Auswerte- und Steuereinrichtung (33) wird eine Spannung auf die Elektromagneten (7 und 28) der den Luftfedern (1, 2 und 22, 23) der rechten Fahrzeugseite zugeordneten 2/2-Wegeventile (6, 7 und 20, 28) sowie auf den Elektromagneten (11) des 3/2-Wegeventils (10, 11) gegeben. Das 3/2-Wegeventil (10, 11) schaltet in der Weise um, daß es die Eingänge der den beiden erwähnten Luftfedern (1, 2 und 22, 23) zugeordneten 2/2-Wegeventile (6, 7 und 20, 28) gegen die Atmosphäre absperrt und mit dem Druckluft-Vorratsbehälter (8) verbindet. Die 2/2-Wegeventile (6, 7 und 20, 28) schalten in der Weise um, daß sie die Druckmittelkammern (2 und 22) der Luftfedern (1, 2 und 22, 23) mit dem Ausgang des 3/2-Wegeventils (10, 11) verbinden.

Druckluft aus dem Druckluft-Vorratsbehälter (8) strömt in die Druckmittelkammern (2 und 22) der Luftfedern (1, 2 und 22, 23) ein. Die rechte Seite des Fahrzeugaufbaues (3) wird dabei durch Vergrößern des Abstandes zwischen diesem Bereich des Fahrzeugaufbaues und den Fahrzeugachsen so weit angehoben, bis sie "Normal-Niveau" erreicht hat. Die Spannung an den Elektromagneten (7 und 28) der 2/2-Wegeventile (6, 7, 20, 28) und an dem Elektromagnet (11) des 3/2-Wegeventils (10, 11) fällt dann ab. Die 2/2Wegeventile (6, 7, 20, 28) und das 3/2-Wegeventil (10, 11) gelangen dann wieder in ihre Ausgangsstellung, in welcher die Druckmittelkammern (2 und 22) der Luftfedern (1, 2 und 22, 23) gegen die Druckmittelquelle (8) und gegen die Atmosphäre abgesperrt sind. Die Druckmitteleingänge der den Luftfedern (1, 2 und 22, 23) zugeordneten 2/2-Wegeventile (6, 7 und 20, 28) sind dann über das 3/2-Wegeventil (10, 11) wieder mit der Atmosphäre verbunden.

Wird die dem Bordstein (39) zugewandte rechte Seite des Fahrzeugaufbaues (3) im Bereich eines Bordsteines abgesenkt, dessen Höhe ein Absenken des Fahrzeugaufbaues (3) bis auf das untere Niveau nicht zuläßt, erfolgt der Absenkvorgang zunächst in der bereits beschriebenen Art und Weise dadurch, daß nach Betätigen einer entsprechenden Taste der Eingabeeinheit (31) Druckluft aus den Druckmittelkammern (2 und 22) der Luftfedern (1, 2 und 22, 23) zur Atmosphäre hin abströmt. Die Druckluftmenge in den Druckmittelkammern (2 und 22) der Luftfedern (1, 2 und 22, 23) verringert sich und die von diesen Luftfedern (1, 2 und 22, 23) abgestützte Seite des Fahrzeugaufbaues (3) wird abgesenkt.

Setzt beim Vorgang des Änderns der Höhenlage dieser Seite des Fahrzeugaufbaues (3) in Richtung auf das Hindernis - Bordstein (39) - zu das freie Ende des Fühlers (36) der Einrichtung zum Erkennen eines Hindernisses (35, 36) auf dem Bordstein (39) auf, führt der Fühler (36) eine Verschwenkbewegung um die Längsachse der den Fühler (36) tragenden Welle aus, wobei der Fühler (36) sich relativ zum Fahrzeugaufbau (3) bewegt. Die Welle wird dadurch um ihre Längsachse gedreht. Das auf der Welle angeordnete Kontaktelement kommt dabei in Kontakt mit dem Gegenkontaktelement. Ein Stromkreis wird dadurch geschlossen und ein elektrisches Signal wird dann von der Einrichtung zum Erkennen eines Hindernisses (35, 36) über die elektrische Leitung (34) auf die Auswerte- und Steuereinrichtung (33) gegeben.

Dieses Signal bewirkt, daß von der Auswerte- und Steuereinrichtung (33) über die elektrische Leitung (30) eine Spannung auf den Elektromagneten (11) des 3/2-Wegeventils (10, 11) gegeben wird. Das 3/2-Wegeventil (10, 11) wird dadurch in der Weise umgeschaltet, daß es die Druckmitteleingänge der den Luftfedern (1, 2 und 22, 23) der rechten Fahrzeugseite zugeordneten 2/2-Wegeventile (6, 7 und 20, 28) gegen die Atmosphäre absperrt und mit dem Druckluft-Vorratsbehälter (8) verbindet. Der Vorgang des Absenkens dieser Seite des Fahrzeugaufbaues (3) wird dadurch beendet, noch bevor diese Seite des Fahrzeugaufbaues auf den Bordstein (39) aufsetzen kann, bzw. bevor diese Fahrzeugseite das untere Niveau erreichen kann.

Vom Druckluft-Vorratsbehälter (8) strömt dann Druckluft durch das 3/2-Wegeventil (10, 11), die Druckmittelleitungen (18, 19, 12), die geöffneten 2/2-Wegeventile (6, 7 und 20, 28) sowie die Druckmittelleitungen (5 und 21) in die Druckmittelkammern (2 und 22) der Luftfedern (1, 2 und 22, 23). Das sich vergrößernde Luftvolumen in den Luftfedern (1, 2 und 22, 23) bewirkt, daß die rechte Seite des Fahrzeugaufbaues (3) angehoben wird. Die Richtung des Änderns der Höhenlage dieser Seite des Fahrzeugaufbaues (3) ist dann entgegengesetzt zu der ursprünglichen Richtung des Änderns der Höhenlage dieser Seite des Fahrzeugaufbaues (3).

Hat die rechte Seite des Fahrzeugaufbaues (3) sich so weit vom Bordstein (39) entfernt, daß der Fühler (36) der Einrichtung zum Erkennen eines Hindernisses (35, 36) in seine Ausgangsstellung zurückgekehrt ist - das Hindernis wird von der Einrichtung (35, 36) nicht mehr erkannt -, haben auch das Kontaktelement und das Gegenkontaktelement des Schalters (35) der Einrichtung zum Erkennen eines Hindernisses (35, 36) keinen Kontakt mehr miteinander. Das Signal der Einrichtung zum Erkennen eines Hindernisses (35, 36) fällt dann ab. Das hat zur Folge, daß auch die Spannung an den Elektromagneten (7 und 28) der den Luftfedern (1, 2 und 22, 23) zugeordneten 2/2-Wegeventile (6, 7 und 20, 28) abfällt. Die 2/2-Wegeventile (6, 7 und 20, 28) schalten dann in der Weise um, daß die Druckmittelkammern (2 und 22) der Luftfedern (1, 2 und 22, 23) gegen den Druckmittelausgang des 3/2-Wegeventils (10, 11) und somit gegen den Druckluft-Vorratsbehälter (8) abgesperrt sind.

Die Seite des Fahrzeugaufbaues (3), die nach dem vorzeitigen Beenden einer Änderung ihrer Höhenlage in der einen Richtung eine anschließende Änderung ihrer Höhenlage in der dieser Richtung entgegengesetzten anderen Richtung erfährt, wird also nicht auf das Normal-Niveau des Fahrzeugaufbaues (3) gebracht, sondern nur so weit angehoben, bis ein vorbestimmter Sicherheitsabstand zwischen dem Fahrzeugaufbau (3) und dem Hindernis erreicht ist.

Um die betreffende Seite des Fahrzeugaufbaues (3) wieder auf das Normal-Niveau zu bringen, wird eine entsprechende Taste der Eingabeeinheit (31) betätigt und so ein Druckeinsteuervorgang eingeleitet, wie er im Vorstehenden bereits beschrieben ist.

Soll bei einer Änderung der Höhenlage des Fahrzeugaufbaues (3) in der einen Richtung bei Erkennen eines Hindernisses der Vorgang des Änderns der Höhenlage abgebrochen werden, ohne daß daran anschließend ein Vorgang des Änderns der Höhenlage des Fahrzeugaufbaues (3) in der dieser Richtung entgegengesetzten anderen Richtung erfolgen soll, wird die Auswerte- und Steuereinrichtung so ausgebildet, daß bei Erkennen eines Hindernisses lediglich die Ausgangssignale der Auswerte- und Steuereinrichtung (33), welche eine Anderung der Höhenlage des Fahrzeugaufbaues (3) bewirken, gesperrt oder solche Ausgangssignale erzeugt werden, welche bewirken, daß die Ventile wieder in ihre Ausgangsstellung gelangen.

Gemäß der Erfindung kann auch an der den Tragelementen abgewandten Seite des Fahrzeugaufbaues eine Einrichtung zum Erkennen eines Hindernisses angeordnet werden. Durch eine solche Maßnahme wird verhindert, daß beim Ändern der Höhenlage des Fahrzeugaufbaues im Sinne eines Anhebens des Fahrzeugaufbaues über das Normalniveau hinaus, der Fahrzeugaufbau mit einem Hindernis, wie z. B. mit der Decke einer Werkstatt , kollidiert.

Wird ein Bereich des Fahrzeugaufbaues durch Druckeinsteuerung in wenigstens eine der Luftfedern, ausgehend vom Normalniveau , angehoben und setzt bei diesem Vorgang der Fühler der Einrichtung zum Erkennen eines Hindernisses auf das Hindernis auf , wird der Vorgang des Anhebens dieses Bereiches des Fahrzeugaufbaues durch Ansteuerung der entsprechenden Ventile abgebrochen und der Fahrzeugaufbau anschließend um einen bestimmten Betrag wieder abgesenkt.

An der den Tragelementen abgewandten Seite und/oder an der den Tragelementen zugewandten Seite des Fahrzeugaufbaues oder auch an anderen geeigneten Stellen des Fahrzeugaufbaues können eine oder mehrere Einrichtungen zum Erkennen eines Hindernisses angeordnet sein, so daß beim Absenken oder Anheben der einen Fahrzeugseite oder der anderen Fahrzeugseite oder der Frontseite oder der Heckseite oder auch des gesamten Fahrzeugaufbaues ein Hindernis erkannt und der Vorgang des Absenkens oder des Anhebens des Fahrzeugaufbaues selbsttätig vorzeitig beendet wird. Vorteilhafterweise schließt an das vorzeitige selbsttätige Beenden des Änderns der Höhenlage des Fahrzeugaufbaues in der einen Richtung ein Ändern der Höhenlage des Fahrzeugaufbaues in der dieser Richtung entgegengesetzten anderen Richtung an, wobei dieser Vorgang dann selbsttätig beendet wird, wenn das Hindernis nicht mehr erkannt wird oder wenn nach einer vorbestimmten Zeit ein Abschaltsignal auftritt.

Das Signal zum vorzeitigen Beenden des Änderns der Höhenlage des Fahrzeugaufbaues in der einen Änderungsrichtung und gegebenenfalls das Signal zum Ändern der Höhenlage des Fahrzeugaufbaues in der dieser Änderungsrichtung entgegengesetzten anderen Änderungsrichtung, nach dem vorzeitigen Beenden einer Änderung der Höhenlage des Fahrzeugaufbaues in der einen Änderungsrichtung, kann von der Einrichtung zum Erkennen eines Hindernisses selbst erzeugt werden oder es kann von der Auswerte- und Steuereinrichtung erzeugt und in Abhängigkeit eines Signals der Einrichtung zum Erkennen eines Hindernisses freigegeben oder gesperrt werden.

Die Einrichtung zum Erkennen eines Hindernisses kann z. B. als eine einfache elektro-mechanische Einrichtung oder auch als eine opto-elektronische Einrichtung oder als einfache Lichtschranke ausgebildet sein.

Gemäß der Erfindung können die Tragelemente, über welche der Fahrzeugaufbau an den Achsen des Fahrzeugs abgestützt ist, sowohl von Luftfederbälgen als auch von anders ausgebildeten Einrichtungen gebildet werden, wie z. B. zwischen Fahrzeugaufbau und Federn angeordneten Arbeitszylindern, die mit einem Druckmittel arbeiten, oder Hebelanordnungen, die mittels elektrischer Stellmotoren verstellbar sind.

## Patentansprüche

1. Verfahren zum Ändern der Höhenlage wenigstens eines Bereiches eines Fahrzeugaufbaues, wobei auf Anforderung die Höhenlage wahlweise durch Absenken dieses Bereiches des Fahrzeugaufbaues in der einen Richtung oder durch Anheben dieses Bereiches des Fahrzeugaufbaues in der entgegengesetzten anderen Richtung verändert wird, dadurch gekennzeichnet, daß bei Erkennen eines Hindernisses beim Ändern der Höhenlage das Ändern selbsttätig beendet wird.

2. Verfahren nach Anspruch 1, gekennzeichnet durch die folgenden Merkmale:
a) das Ändern der Höhenlage wenigstens eines Bereiches des Fahrzeugaufbaues wird von wenigstens einem zwischen dem Fahrzeugaufbau und wenigstens einer Fahrzeugachse angeordneten, den Fahrzeugaufbau gegenüber dieser Fahrzeugachse abstützenden Tragelement dadurch bewirkt, daß das Tragelement den Abstand zwischen wenigstens dem einen Bereich des Fahrzeugaufbaues und dieser Fahrzeugachse in Abhängigkeit von Signalen einer Auswerte- und Steuereinrichtung verkleinert oder vergrößert;
b) das selbsttätige Beenden des Änderns der Höhenlage erfolgt in Abhängigkeit eines Signals einer am Fahrzeugaufbau angeordneten und mit der Auswerte- und Steuereinrichtung verknüpften Einrichtung zum Erkennen eines Hindernisses , wenn die Einrichtung zum Erkennen eines Hindernisses ein Hindernis erkennt.

3. Verfahren nach wenigstens einem der vorhergehenden Ansprüche, dadurch gekennzeichnet, daß das Ändern der Höhenlage selbsttätig beendet wird, bevor der Bereich des Fahrzeugaufbaues, dessen Höhenlage geändert wird, das Hindernis erreicht.

4. Verfahren nach wenigstens einem der vorhergehenden Ansprüche, dadurch gekennzeichnet, daß nach der Beendigung des auf das Hindernis zu gerichteten Änderns der Höhenlage ein selbsttätiges Ändern der Höhenlage in der entgegengesetzten Richtung erfolgt, bis ein Abschaltsignal erzeugt wird.

5. Verfahren nach wenigstens einem der vorhergehenden Ansprüche, dadurch gekennzeichnet, daß nach der Beendigung des auf das Hindernis zu gerichteten Änderns der Höhenlage ein selbsttätiges Ändern der Höhenlage in der entgegengesetzten Richtung erfolgt, bis das Hindernis nicht mehr erkannt wird.

6. Verfahren nach wenigstens einem der vorhergehenden Ansprüche, gekennzeichnet durch die folgenden Merkmale:
a) das nach dem Beenden des auf das Hindernis zu gerichteten Änderns der Höhenlage des Fahrzeugaufbaues selbsttätige Ändern der Höhenlage in der entgegengesetzten Richtung erfolgt in Abhängigkeit von einem Signal der Einrichtung zum Erkennen eines Hindernisses;
b) das Ändern der Höhenlage in dieser Richtung wird dann beendet, wenn das Signal der Einrichtung zum Erkennen eines Hindernisses abfällt oder durch ein anderes Signal ersetzt wird.

7. Einrichtung zum Durchführen des Verfahrens nach Anspruch 1, mit folgenden Merkmalen:
a) Zwischen dem Fahrzeugaufbau (3) und wenigstens einer Fahrzeugachse (4 und 38) ist wenigstens ein Tragelement (1, 2, 13, 14, 22, 23, 26, 27) angeordnet, über welches der Fahrzeugaufbau (3) gegenüber dieser Fahrzeugachse (4, 38) abgestützt ist;
b) das Tragelement (1, 2, 13, 14, 22, 23, 26, 27) ist so ausgebildet, daß es in Abhängigkeit von Signalen einer Auswerte- und Steuereinrichtung (33) eine Verkleinerung oder eine Vergrößerung des Abstandes zwischen wenigstens des einen Bereiches des Fahrzeugaufbaues (3) und wenigstens der einen Fahrzeugachse (4, 38) bewirkt,
gekennzeichnet durch die folgenden Merkmale:
c) am Fahrzeugaufbau (3) oder an einem mit dem Fahrzeugaufbau (3) verbundenen Teil ist eine Einrichtung zum Erkennen eines Hindernisses (35, 36) so angeordnet, daß das Hindernis erkannt wird, bevor der Fahrzeugaufbau (3) beim Ändern seiner Höhenlage das Hindernis erreichen kann;
d) die Einrichtung zum Erkennen eines Hindernisses (35, 36) ist mit der Auswerte- und Steuereinrichtung (33) derart verknüpft, daß beim Ändern der Höhenlage wenigstens eines Bereiches des Fahrzeugaufbaues (3) das Ändern vorzeitig beendet wird, wenn die Einrichtung zum Erkennen eines Hindernisses (35, 36) ein Hindernis erkannt hat.

8. Einrichtung zum Durchführen des Verfahrens nach Anspruch 7, dadurch gekennzeichnet, daß die Auswerte- und Steuereinrichtung (33) so ausgebildet ist, daß sie nach dem vorzeitigen Beenden des Änderns der Höhenlage in Richtung auf das Hindernis zu selbsttätig ein Ändern der Höhenlage in der entgegengesetzten Richtung bewirkt.

9. Einrichtung zum Durchführen des Verfahrens nach wenigstens einem der vorhergehenden Ansprüche, dadurch gekennzeichnet, daß das Tragelement (1, 2, 13, 14, 22, 23, 26, 27) als Luftfeder ausgebildet ist, die eine Druckmittelkammer (2, 13, 22, 26) aufweist, wobei die Druckmittelkammer (2, 13, 22, 26) über eine Ventileinrichtung (6, 7, 16, 20, 28, 24, 10, 11) wahlweise mit einer Druckmittelquelle (8) oder mit einer Druckmittelsenke verbindbar oder gegen beide absperrbar ist.

10. Einrichtung zum Durchführen des Verfahrens nach wenigstens einem der vorhergehenden Ansprüche, dadurch gekennzeichnet, daß die Auswerte- und Steuereinrichtung (33) Mittel enthält, die bei Auftreten eines Signals der Einrichtung zum Erkennen eines Hindernisses (35, 36), welches auf das Vorhandensein eines Hindernisses hinweist, zuerst einen laufenden Vorgang des Änderns der Höhenlage des Fahrzeugaufbaues (3) in der einen Richtung - Fahrzeugaufbau (3) absenken oder Fahrzeugaufbau (3) anheben - abbrechen, an diesen Vorgang anschließend einen Vorgang des Änderns der Höhenlage des Fahrzeugaufbaues in der jeweils anderen Richtung - Fahrzeugaufbau (3) anheben oder Fahrzeugaufbau (3) absenken - einleiten und diesen Vorgang beenden, sobald das Signal der Einrichtung zum Erkennen eines Hindernisses (35, 36) abfällt oder durch ein anderes Signal ersetzt wird.

11. Einrichtung zum Durchführen des Verfahrens nach wenigstens einem der vorhergehenden Ansprüche, dadurch gekennzeichnet, daß die Einrichtung zum Erkennen eines Hindernisses (35, 36) im wesentlichen aus einem Fühler (36) und mehreren elektrischen Kontaktelementen besteht, die durch Verändern der Lage des Fühlers (36) miteinander in Kontakt bringbar sind, wobei die Einrichtung zum Erkennen eines Hindernisses (35, 36) so ausgebildet und so am Fahrzeugaufbau (3) oder an einem mit dem Fahrzeugaufbau (3) verbundenen Teil angeordnet ist, daß sich der Fühler (36) bei Auftreffen auf ein Hindernis relativ zum Fahrzeugaufbau bewegt.

12. Einrichtung zum Durchführen des Verfahrens nach wenigstens einem der vorhergehenden Ansprüche, dadurch gekennzeichnet, daß die Einrichtung zum Erkennen eines Hindernisses als eine optoelektronische Einrichtung ausgebildet ist.
